# FASCICULE DE BREVET EUROPEEN

(11) **EP 2 178 484 B1**
(45) Date de publication et mention de la délivrance du brevet: **02.11.2011**
(21) Numéro de dépôt: 08830623.8
(22) Date de dépôt: 11.07.2008
(51) Int. Cl.: A61G 3/06, B60P 1/44

(54) **DISPOSITIF ELEVATEUR POUR FAUTEUIL ROULANT**
HEBEVORRICHTUNG FÜR EINEN ROLLSTUHL
LIFT DEVICE FOR A ROLLING CHAIR

(30) Priorité: 13.07.2007 FR 0705100
(43) Date de publication de la demande: 28.04.2010
(73) Titulaire: Bourgeois, Alain, Dungarvan, Co. Waterford (IE)
(72) Inventeur: DE ABREU, Maxime, F-76600 Le Havre (FR); ADDE, Bastien, F-61800 Tinchebray (FR)
(74) Mandataire: Oudin, Stéphane
(86) Numéro de dépôt international: PCT/FR2008/001024
(87) Numéro de publication internationale: WO 2009/034272

(56) Documents cités:
- EP-A- 1 520 570
- DE-A1- 2 928 607
- FR-A- 2 516 493
- FR-A- 2 786 454
- US-A- 4 096 955

## Description

La présente invention concerne un élévateur de fauteuil roulant électrique ou manuel, adapté notamment aux portes latérales coulissantes d'un véhicule automobile, permettant le transfert et le chargement dudit fauteuil roulant et de son occupant à bord dudit véhicule.

Dans le domaine des adaptations de véhicules automobiles, on connaît différents dispositifs permettant l'accès aux personnes à mobilité réduite. Ces dispositifs possèdent une plate-forme décrivant un mouvement de translation simple ou double associé ou non à un mouvement de rotation de manière à déplacer ladite plate-forme depuis une position basse sur le sol à l'extérieur du véhicule jusqu'à une position haute à l'intérieur du véhicule.

Parmi ce type de dispositifs, on connaît déjà un élévateur supportant une plate-forme destinée à recevoir le fauteuil roulant. Cette plate-forme se translate le long de rails fixés suivant des directions longitudinale et latérale à l'intérieur du véhicule permettant de passer de la position route où l'ensemble (plate-forme - fauteuil roulant) est placé dans le véhicule pour le trajet, à une position de travail où l'ensemble (plate-forme - fauteuil roulant) est placé à l'extérieur du véhicule. L'élévateur peut alors descendre la plate-forme au sol. L'inconvénient d'un tel dispositif est que le dispositif est encombrant et qu'il ne permet pas, à cause des rails, au fauteuil roulant de se déplacer à l'intérieur du véhicule. De plus, ce dispositif est particulièrement complexe car il nécessite l'emploi d'au moins trois actionneurs pour effectuer la totalité des mouvements.

Enfin, on connaît des élévateurs dont la plate-forme porteuse située sur le coté du véhicule et articulée autour d'un axe vertical situé à l'intérieur dudit véhicule à proximité du montant de porte, permet à une personne dans un fauteuil roulant arrivant parallèlement au véhicule de se positionner sur ladite plate-forme et de monter jusqu'à la hauteur du plancher du véhicule, puis de pivoter autour dudit axe vertical jusqu'à se trouver perpendiculaire dos à l'entrée de la porte coulissante et enfin de reculer à l'intérieur du véhicule. Toutefois, ce type de dispositif implique une largeur libre de porte importante du fait du grand rayon décrit par l'extrémité de la plate-forme lors de son entrée dans le véhicule.

La présente invention a pour but de remédier à ces divers inconvénients en proposant un élévateur de fauteuil roulant électrique ou manuel adapté notamment aux portes latérales coulissantes des véhicules automobiles, particulièrement compact, simple à mettre en oeuvre, et apte à s'adapter à de nombreux types de portes coulissantes même étroites car il possède un dispositif permettant de réduire le rayon décrit par l'extrémité de la plate-forme lors de son entrée dans le véhicule.

A cet égard, la présente invention, selon la revendication 1, a pour objet un élévateur de fauteuil roulant électrique ou manuel, permettant le transfert et le chargement dudit fauteuil roulant et de son occupant à bord d'un véhicule, comportant une plate-forme sensiblement horizontale apte à recevoir ledit fauteuil roulant et son occupant et susceptible d'être déplacée verticalement à l'extérieur du véhicule par un élément mobile d'une colonne élévatrice comprenant un corps et un premier actionneur mettant en mouvement ledit élément mobile, depuis le niveau du sol, position dite « sortie au sol », jusqu'à un niveau situé au-dessus du plancher dudit véhicule, position dite « sortie haute », et inversement. La plate-forme est également susceptible d'être déplacée vers l'intérieur du véhicule depuis ladite position « sortie haute » jusqu'à une position dite de « stockage », où la plate-forme est rentrée à l'intérieur du véhicule, et inversement, par des moyens de transfert comprenant un bâti solidaire du plancher du véhicule et disposé perpendiculairement à l'ouverture de la porte du véhicule, un second actionneur composé d'un corps et d'une tige apte à sortir et à rentrer dans ledit corps perpendiculairement à l'ouverture de la porte dudit véhicule, au moins un premier bras et au moins un second bras. Cet élévateur est remarquable en ce que le premier bras est articulé à l'une de ses extrémités suivant un premier axe vertical au bâti et à l'autre suivant un second axe vertical à l'une des extrémités du second bras, qui est solidaire par son autre extrémité au corps de la colonne élévatrice, de manière à ce que lesdits bras forment un compas dont les deux branches peuvent aller, grâce au second actionneur, d'une position « ouverte » où les branches sont sensiblement dans le prolongement l'une de l'autre, à une position « fermée » où les deux branches sont proches l'une de l'autre, et inversement, lesdites positions « ouverte » et « fermée » correspondant réciproquement aux positions « sortie haute » et « stockage » de la plate-forme.

Selon une autre caractéristique de l'invention, l'extrémité libre de la tige du second actionneur est articulée suivant un troisième axe vertical à l'ensemble constitué par le second bras et la colonne élévatrice de sorte que ladite tige, en rentrant dans le corps du second actionneur, tire sur le second bras pour amener les premier et second bras de leur position « ouverte » à leur position « fermée », et inversement.

Afin de faire mieux ressortir d'autres avantages et caractéristiques de la présente invention, on décrira ci-après à titre d'exemple non limitatif, une forme d'exécution préférée de ladite invention, en référence aux dessins annexés sur lesquels :
- la figure 1 est une vue partielle en perspective de l'élévateur de fauteuils roulants en position « sortie haute »,
- la figure 2 est une vue partielle en perspective de l'élévateur de fauteuils roulants en position « sortie au sol »,
- les figures 3 à 5 sont des vues partielles de dessus réduites présentant la cinématique de l'élévateur.

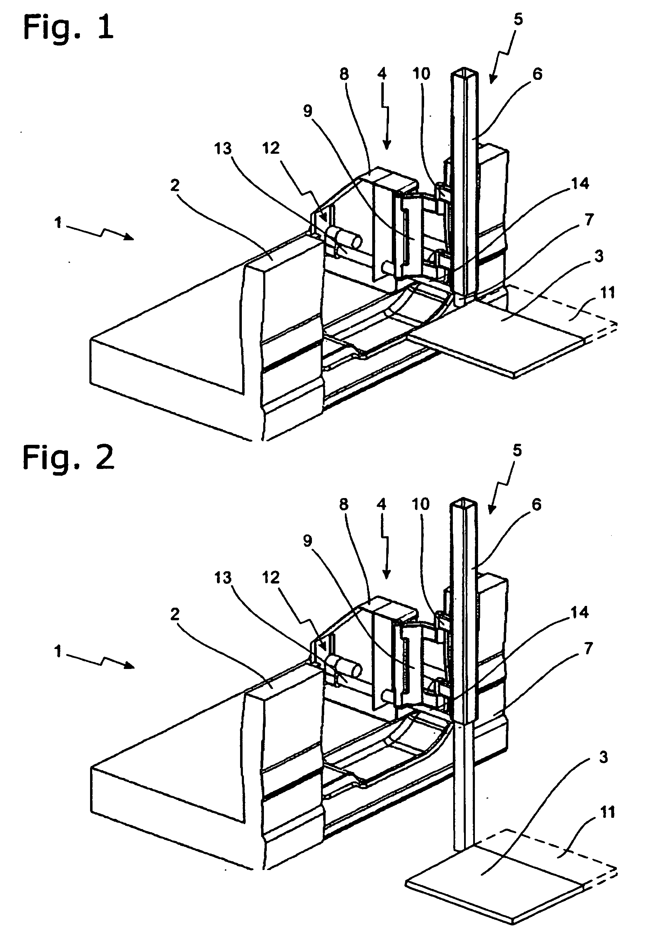

En référence aux figures 1 et 2, l'élévateur 1 de fauteuil roulant selon l'invention permettant le transfert et le chargement dudit fauteuil roulant et de son occupant à bord d'un véhicule 2, par notamment une porte latérale coulissante, comprend une plate-forme 3 sensiblement horizontale, des moyens de transfert 4 et une colonne élévatrice 5 télescopique comportant un corps 6 et un élément mobile 7 mis en mouvement à l'intérieur dudit corps 6 par un premier actionneur (non représenté).

Les moyens de transfert 4 comportent un bâti 8 solidaire du plancher horizontal du véhicule 2 disposé de préférence derrière le dossier du siège passager avant perpendiculairement à l'ouverture d'une porte latérale coulissante dudit véhicule 2 et sur lequel est articulée suivant un premier axe vertical une extrémité d'au moins un premier bras 9 s'étendant vers l'extérieur dudit véhicule 2 et dont l'autre extrémité est articulée suivant un second axe vertical à au moins un second bras 10 de manière à ce que lesdits bras 9 et 10 forment un compas dont les deux branches peuvent aller d'une position « ouverte » où les branches sont sensiblement dans le prolongement l'une de l'autre à une position « fermée » où les deux branches sont proches l'une de l'autre, et inversement.

L'autre extrémité du second bras 10 est fixée sur le corps 6 de la colonne élévatrice 5 dont l'élément mobile 7 est solidaire de la plate-forme 3 qui possède une partie mobile 11 escamotable et qui est apte à recevoir un fauteuil roulant et son occupant (non représentés). La colonne élévatrice 5 permet le déplacement de la plate-forme 3 depuis le niveau du sol, position dite « sortie au sol »,jusqu'à un niveau situé un peu au-dessus du niveau du plancher du véhicule 3, position dite « sortie haute », et inversement.

Il va de soi que la plate-forme 3 possède des moyens de fixation rapides adaptés (non représentés) garantissant le maintien du fauteuil roulant et de son occupant sur ladite plate-forme 3 durant toute la durée du transfert.

L'élévateur 1 comporte également un second actionneur 12 dont le corps 13 est, pour augmenter la compacité du dispositif, situé à l'intérieur du bâti 8, et dont la tige mobile 14 est apte à se déplacer en dehors dudit corps 13 et donc du bâti 8 de manière sensiblement horizontale et perpendiculairement à l'ouverture de la porte dudit véhicule 2 , aidée en cela par un moyen de guidage linéaire (non représenté).

Ce moyen de guidage linéaire sera de préférence une barre renfort en liaison pivot glissant avec le bâti 8, disposée sous l'actionneur 12 dans le plan longitudinal vertical dudit actionneur 12 et fixée à ladite tige 14.

Il va de soi que l'Homme du Métier n'aura aucune difficulté à concevoir un moyen de guidage linéaire adapté permettant de guider linéairement le déplacement de ladite tige 14 sans sortir du cadre de ce brevet.

L'extrémité libre de la tige 14 est articulée sur l'ensemble constitué par le second bras 10 et la colonne élévatrice 5 suivant d'un troisième axe vertical et en un point situé au voisinage du milieu dudit ensemble (second bras 10 - colonne élévatrice 5).

Compte tenu des efforts mécaniques mis en oeuvre et des dimensions des différents éléments, le second actionneur 12 est de préférence fixé juste au-dessus du plancher du véhicule 3 et l'extrémité de sa tige 14 est articulée en bas du corps 6 de la colonne élévatrice 5.

De plus et du fait de la configuration des premier et second bras 9 et 10, le second actionneur 12 est tel que sa tige 14 en rentrant, tire la colonne élévatrice 5 qui pivote en même temps qu'elle se déplace vers l'intérieur du véhicule 2, et inversement.

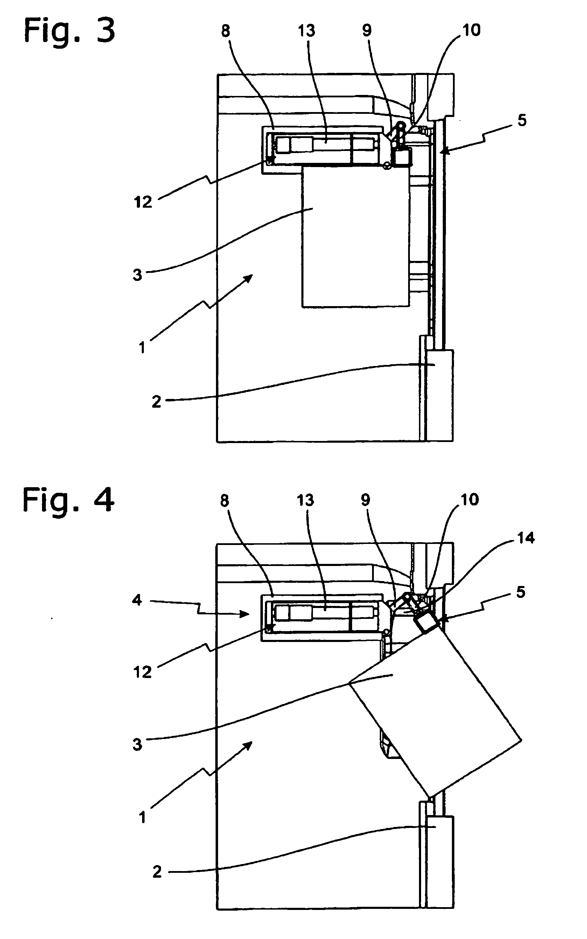

En effet, en référence aux figures 3 à 5, au début du mouvement de la tige 14, le déplacement de la colonne élévatrice 5 et de la plate-forme 3 est proche d'une rotation, alors qu'à la fin de la rentrée de la tige 14, ce déplacement est proche d'une translation permettant à la plate-forme 2 de pénétrer à l'intérieur du véhicule 2 suivant une trajectoire perpendiculaire à l'ouverture de la porte de ce dernier.

Pour éviter tout risque d'arc-boutement, il va de soi, pour l'Homme du Métier, qu'il ne faut pas que le premier axe vertical d'articulation du premier bras 9 sur le bâti 8 appartienne au plan longitudinal vertical de l'actionneur 12. En effet dans le cas contraire, lorsque les premier et second bras 9 et 10 sont en position « ouverte », les premier, second et troisième axes verticaux seraient coplanaires et appartiendraient alors audit plan longitudinal de l'actionneur 12. Dans cette position, au moment de ramener les premier et second bras 9 et 10 en position « fermée », un phénomène d'arc-boutement pourrait alors se produire empêchant la fermeture desdits bras.

De même, pour des raisons de compacité, il est avantageux d'avoir un premier bras 9 non rectiligne possédant une pliure verticale et sensiblement médiane. Le bras 9 a alors une section horizontale en forme générale de cornière ouverte à plus de 90°. Cette configuration permet en outre d'avoir la plate-forme 3 perpendiculaire au plan longitudinal dudit véhicule 2, lorsqu'elle est entièrement rentrée dans le véhicule 2.

Avec ce dispositif et compte tenu des dimensions standards des véhicules 2, la plate-forme 3 ne peut pas rentrer entièrement à l'intérieur desdits véhicules 2, il est donc nécessaire d'escamoter la partie mobile 11 dépassant du véhicule 2 pour pouvoir fermer la porte latérale coulissante.

Il va bien entendu de soi que l'Homme du Métier n'aura aucune difficulté à concevoir une partie mobile 11 adaptée, de préférence automatisée, ou à la remplacer par une partie entièrement retirable sans sortir du cadre de ce brevet.

Les premier et second actionneurs sont avantageusement des vérins hydrauliques à double effet alimentés, par exemple par une centrale électrohydraulique (non représentée). Bien sûr, ils peuvent être substitués par tout autre vérin tel que des vérins électriques ou analogues ou par tout autre moyen d'actionnement procurant des effets similaires, par exemple un système motorisé écrou et vis sans fin ou encore un treuil motorisé.

Enfin, afin d'augmenter la stabilité de l'élévateur 1 et de répartir les efforts le long de la colonne élévatrice 5, on comprend aisément qu'il est avantageux soit d'augmenter la dimension des bras (9, 10) suivant la direction verticale, soit de superposer verticalement plusieurs ensemble de bras (9, 10) ou encore de d'associer ces deux variantes.

Selon un mode de réalisation privilégié en référence aux figures 1 et 2, l'élévateur 1 comporte deux second bras 10 superposés et articulés en haut et en bas d'un grand premier bras 9.

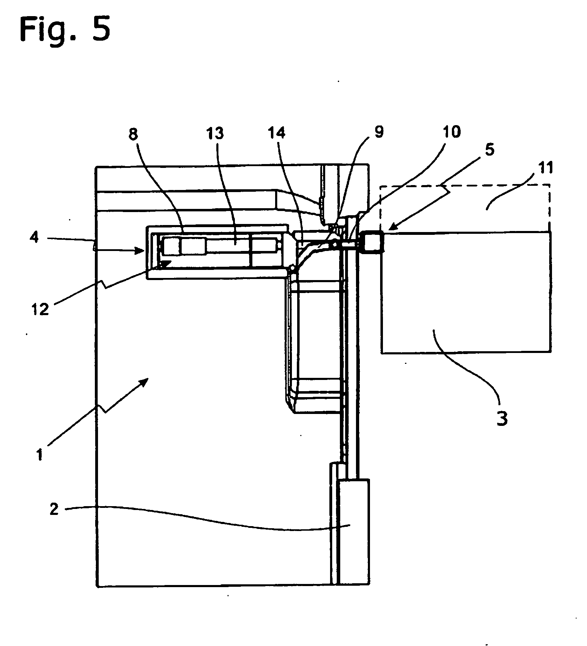

Lorsque l'utilisateur désire prendre place à l'intérieur du véhicule 2, il ouvre la porte latérale du véhicule 2 dont la plate-forme 3 est rentrée à l'intérieur avec sa partie mobile 11 repliée, position dite de « stockage ». (figure 3). Il déplace alors progressivement la plate-forme 3 vers l'extérieur du véhicule 2, en faisant sortir la tige 14 du second actionneur 12 (figure 4). Une fois ladite tige 14 entièrement sortie, la plate-forme 3 est alors dans une position haute située à l'extérieur du véhicule (figure 5), position dite « sortie haute ». Dans cette position et après avoir déplié la partie mobile 11, l'utilisateur fait descendre, en utilisant le premier actionneur, ladite plate-forme 3 jusqu'à une position basse dite « sortie au sol » sur laquelle il s'installe avec son fauteuil roulant parallèlement au véhicule 2. En faisant fonctionner le premier actionneur, il amène la plate-forme 3 dans la position « sortie haute ». Ensuite, il n'a plus qu'à faire rentrer la tige 14 du second actionneur 12 afin de rentrer la plate-forme 3 dans le véhicule jusqu'à la position « stockage ». Enfin après avoir quitté la plate-forme pour se positionner correctement dans le véhicule 2 notamment dans le sens de la marche du véhiculé 2, la partie mobile 11 de la plate-forme 3 sera escamotée avant que l'utilisateur ne ferme la porte du véhicule 2. Arrivé à destination, l'utilisateur procédera de la manière inverse afin de sortir du véhicule 2.

On devine aisément que du fait de ces différents mouvements de rotation et de translation, cet élévateur 1 doit être utilisé dans des véhicules du type monospace équipés d'origine de portes coulissantes et dont le plancher est plat et surélevé par rapport aux véhicules classiques.

Toutefois, on comprend aussi qu'un tel dispositif peut être installé non seulement en porte latérale mais aussi en porte arrière où il pourra avantageusement permettre une sortie transversale, par exemple directement sur le trottoir, dans le cas où le véhicule 2 serait garé le long dudit trottoir.

Enfin, il va bien entendu de soi que la présente invention n'ést pas limitée à l'exemple de réalisation préférentiel décrit, mais qu'elle peut être modifiée ou adaptée en fonction des besoins ou des exigences particulières, sans pour autant sortir du cadre de l'invention telle pue définie dans les revendications.

## Revendications

1. Elévateur (1) de fauteuil roulant électrique ou manuel, permettant le transfert et le chargement dudit fauteuil roulant et de son occupant à bord d'un véhicule (2), comportant une plate-forme (3) sensiblement horizontale, apte à recevoir un fauteuil roulant et son occupant, et susceptible d'être, d'une part, déplacée verticalement à l'extérieur du véhicule (2) par un élément mobile (7) d'une colonne élévatrice (5) comprenant un corps (6) et un premier actionneur mettant en mouvement ledit élément mobile (7), depuis le niveau du sol, position dite « sortie au sol », jusqu'à un niveau situé au-dessus du plancher dudit véhicule (2), position dite « sortie haute », et inversement, et, d'autre part, déplacée vers l'intérieur du véhicule (2) depuis ladite position « sortie haute » jusqu'à une position dite de « stockage », où la plate-forme (3) est rentrée à l'intérieur du véhicule (2), et inversement, par des moyens de transfert (4) comprenant un bâti (8) solidaire du plancher du véhicule (2) et disposé perpendiculairement à l'ouverture de la porte du véhicule (2), un second actionneur (12) composé d'un corps (13) et d'une tige (14) apte à sortir et à rentrer dans le corps (13) perpendiculairement à l'ouverture de la porte dudit véhicule (2), au moins un premier bras (9) et au moins un second bras (10), **caractérisé en ce que** le premier bras (9) est articulé à l'une de ses extrémités suivant un premier axe vertical sur le bâti (8) et à l'autre suivant un second axe vertical à l'une des extrémités du second bras (10), qui est solidaire par son autre extrémité au corps (6) de la colonne élévatrice (5), de manière à ce que lesdits bras (9, 10) forment un compas dont les deux branches peuvent aller, grâce au second actionneur (12), d'une position « ouverte » où les branches sont sensiblement dans le prolongement l'une de l'autre, à une position « fermée » où les deux branches sont proches l'une de l'autre, et inversement, lesdites positions « ouverte » et « fermée » correspondant réciproquement aux positions « sortie haute » et « stockage » de la plate-forme (3).

2. Elévateur (1) suivant la revendication 1, **caractérisé en ce que** la tige (14) de l'actionneur (12) est guidée par un moyen de guidage linéaire.

3. Elévateur (1) suivant la revendication précédente, **caractérisé en ce que** le moyen de guidage linéaire est une barre renfort en liaison pivot glissant avec le bâti (8), disposée sous l'actionneur (12) dans le plan longitudinal vertical dudit actionneur (12) et fixée à ladite tige (14).

4. Elévateur (1) suivant l'une quelconque des revendications 1 à 3, **caractérisé en ce que** le premier axe vertical d'articulation du premier bras (9) au bâti (8) n'appartient pas au plan longitudinal vertical du second actionneur (12).

5. Elévateur (1) suivant l'une quelconque des revendications 1 à 4, **caractérisé en ce que** le premier bras (9) possède une pliure verticale et sensiblement médiane.

6. Elévateur (1) suivant l'une quelconque des revendications 1 à 5, **caractérisé en ce que** l'élévateur (1) possède deux seconds bras (10) superposés et articulés en haut et en bas d'un grand premier bras (9).

7. Elévateur (1) suivant l'une quelconque des revendications 1 à 6, **caractérisé en ce que** l'extrémité libre de la tige (14) est articulée suivant un troisième axe vertical à l'ensemble constitué par le second bras (10) et la colonne élévatrice (5).

8. Elévateur (1) suivant l'une quelconque des revendications précédentes, **caractérisé en ce que** la tige (14) en rentrant dans le corps 13 de l'actionneur (12), tire sur le second bras (10) pour amener les premier et second bras (9, 10) de leur position « ouverte » à leur position « fermée », et inversement.

9. Elévateur (1) suivant l'une quelconque des revendications précédentes, **caractérisé en ce que** le premier actionneur et le second actionneur (12) sont des vérins hydrauliques à double effet alimentés par une centrale électrohydraulique.

10. Elévateur (1) suivant l'une quelconque des revendications précédentes, **caractérisé en ce que** la plate-forme (3) comporte des moyens de fixation rapides adaptés garantissant le maintien du fauteuil roulant et de son occupant sur ladite plate-forme (3) durant toute la durée du transfert.

## Claims

1. Lift (1) for an electric or manual wheelchair, enabling said wheelchair and the occupant thereof to be transferred and loaded on board a vehicle (2), comprising a substantially horizontal platform (3) able to receive a wheelchair and the occupant thereof and able firstly to be moved vertically outside the vehicle (2) by a movable element (7) of a lifting column (5) comprising a body (6) and a first actuator moving said movable element (7), from ground level, the so-called "ground exit" position, to a level situated above the floor of said vehicle (2), the so-called "high exit" position, and vice versa, and secondly moved towards the inside of the vehicle (2) from said "high exit" position to a so-called "storage" position, where the platform (3) is retracted inside the vehicle (2), and vice versa, by transfer means (4) comprising a frame (8) secured to the floor of the vehicle (2) and disposed perpendicular to the opening of the door of the vehicle (2), a second actuator (12) composed of a body (13) and a rod (14) able to emerge from and retract into the body (13) perpendicular to the opening of the door of said vehicle (2), at least one first arm (9) and at least one second arm (10), **characterised in that** the first arm (9) is articulated at one of the ends thereof on a first vertical axis on the frame (8) and at the other end on a second vertical axis at one of the ends of the second arm (10), which is secured by the other end thereof to the body (6) of the lifting column (5), so that said arms (9, 10) form a pair of compasses, the two legs of which can, by virtue of the second actuator (12), go from an "open" position in which the legs are substantially in line with each other to a "closed" position in which the two legs are close to each other, and vice versa, said "open" and "closed" positions corresponding respectively to the "high exit" and "storage" positions of the platform (3).

2. Lift (1) according to claim 1, **characterised in that** the rod (14) of the actuator (12) is guided by a linear guidance means.

3. Lift (1) according to the preceding claim, **characterised in that** the linear guidance means is a reinforcing bar in sliding pivot connection with the frame (8), disposed under the actuator (12) in the vertical longitudinal plane of said actuator (12) and fixed to said rod (14).

4. Lift (1) according to any one of claims 1 to 3, **characterised in that** the first vertical axis for articulation of the first arm (9) on the frame (8) does not form part of the vertical longitudinal plane of the second actuator (12).

5. Lift (1) according to any one of claims 1 to 4, **characterised in that** the first arm (9) has a vertical and substantially median fold.

6. Lift (1) according to any one of claims 1 to 5, **characterised in that** the lift has two superimposed second arms (10) articulated at the top and bottom of a large first arm (9).

7. Lift (1) according to any one of claims 1 to 6, **characterised in that** the free end of the rod (14) is articulated on a third vertical axis on the assembly consisting of the second arm (10) and the lifting column (5).

8. Lift (1) according to any one of the preceding claims, **characterised in that** the rod (14), in retracting into the body (13) of the actuator (12), pulls on the second arm (10) in order to bring the first and second arms (9, 10) from their "open" position to their "closed" position, and vice versa.

9. Lift (1) according to any one of the preceding claims, **characterised in that** the first actuator and the second actuator (12) are double-acting hydraulic jacks supplied by an electro-hydraulic unit.

10. Lift (1) according to any one of the preceding claims, **characterised in that** the platform (3) comprises adapted quick fixing means guaranteeing the holding of the wheelchair and the occupant thereof on said platform (3) throughout the transfer.

## Patentansprüche

1. Elektrische oder manuelle Hebevorrichtung (1) für einen Rollstuhl, die den Transfer und die Verladung des besagten Rollstuhls und seines Insassen an Bord eines Fahrzeugs (2) ermöglicht, umfassend eine in etwa horizontale Plattform (3), die in der Lage ist, einen Rollstuhl und dessen Insassen aufzunehmen, und die imstande ist, einerseits vertikal und außerhalb des Fahrzeugs (2) durch ein mobiles Element (7) einer Hubsäule (5) umfassend einen Korpus (6) und ein erstes Wirkglied zum Bewegen des besagten mobilen Elements (7) von einer Bodenebene, einer "Bodenauslauf" genannten Position, bis auf eine Ebene oberhalb der Bodenplatte des besagten Fahrzeugs (2), einer "oberer Auslauf" genannten Position und umgekehrt, und andererseits im Inneren des Fahrzeugs (2) aus der besagten Position "oberer Auslauf" bis in eine "Ablage" genannte Position bewegt zu werden, wobei die Plattform (3) durch Transfervorrichtungen (4) ins Innere des Fahrzeugs (2) gebracht wird, und umgekehrt, die ein Gehäuse (8) umfassen, das fest mit der Bodenplatte des Fahrzeugs (2) verbunden und normal zur Türöffnung des Fahrzeugs (2) angeordnet ist, und ein zweites Wirkglied (12), bestehend aus einem Korpus (13) und einer Stange (14), die in der Lage ist, normal zur Türöffnung des besagten Fahrzeugs (2) im Korpus (13) ein- und auszufahren, zumindest einen ersten Arm (9) und zumindest einen zweiten Arm (10), **dadurch gekennzeichnet, dass** der erste Arm (9) an einem seiner Enden entsprechend einer ersten senkrechten Achse beweglich auf dem Gehäuse (8) befestigt ist, sowie am anderen entsprechend einer zweiten senkrechten Achse an einem der Enden des zweiten Armes (10), der an seinem anderen Ende fest mit dem Korpus (6) der Hubsäule (5) verbunden ist, sodass die besagten Arme (9, 10) einen Zirkel bilden, dessen beide Äste sich dank des zweiten Wirkgliedes (12) von einer "offenen" Stellung, in der sich die Äste in etwa fortlaufend zueinander befinden, in eine "geschlossene" Stellung bewegen können, in der die beiden Äste nahe beieinander liegen, und umgekehrt, wobei die besagten "offenen" und "geschlossenen" Stellungen wechselweise den Positionen "oberer Auslauf" und "Ablage" der Plattform (3) entsprechen.

2. Hebevorrichtung (1) nach Anspruch 1, **dadurch gekennzeichnet, dass** die Stange (14) des Wirkglieds (12) durch eine Linearführungsvorrichtung geführt wird.

3. Hebevorrichtung (1) nach dem vorherigen Anspruch, **dadurch gekennzeichnet, dass** die Linearführungsvorrichtung eine Strebe ist, die über ein gleitendes Achsgelenk mit dem Gehäuse (8) verbunden, und unter dem Wirkglied (12) in einer senkrechten Längsebene des besagten Wirkgliedes (12) angeordnet, und an der besagten Stange (14) befestigt ist.

4. Hebevorrichtung (1) nach einem der Ansprüche 1 bis 3, **dadurch gekennzeichnet, dass** die erste senkrechte Drehachse des ersten Armes (9) am Gehäuse (8) nicht der senkrechten Längsebene des zweiten Wirkgliedes (12) angehört.

5. Hebevorrichtung (1) nach einem der Ansprüche 1 bis 4, **dadurch gekennzeichnet, dass** der erste Arm (9) eine senkrechte und in etwa in der Mitte verlaufende Krümmung besitzt.

6. Hebevorrichtung (1) nach einem der Ansprüche 1 bis 5, **dadurch gekennzeichnet, dass** die Hebevorrichtung (1) zwei übereinander liegende zweite Arme (10) besitzt, die oben und unten von einem großen ersten Arm (9) bewegt werden.

7. Hebevorrichtung (1) nach einem der Ansprüche 1 bis 6, **dadurch gekennzeichnet, dass** das freie Ende der Stange (14) entsprechend einer dritten senkrechten Achse beweglich an der Einheit befestigt ist, die vom zweiten Arm (10) und der Hubsäule (5) gebildet wird.

8. Hebevorrichtung (1) nach einem der vorherigen Ansprüche, **dadurch gekennzeichnet, dass** die Stange (14) beim Einfahren in den Korpus (13) des Wirkglieds (12) am zweiten Arm (10) zieht, um den ersten und den zweiten Arm (9, 10) von ihrer "offenen" Stellung in ihre "geschlossene" Stellung zu bringen, und umgekehrt.

9. Hebevorrichtung (1) nach einem der vorherigen Ansprüche, **dadurch gekennzeichnet, dass** das erste Wirkglied und das zweite Wirkglied (12) doppelt wirkende Hydraulikzylinder sind, die von einem Elektro-Hydraulikaggregat versorgt werden.

10. Hebevorrichtung (1) nach einem der vorherigen Ansprüche, **dadurch gekennzeichnet, dass** die Plattform (3) geeignete Schnellbefestigungsvorrichtungen umfasst, die das Standvermögen des Rollstuhls und seines Insassen auf der besagten Plattform (3) für die Dauer des Transfers gewährleisten.
